# EUROPÄISCHE PATENTSCHRIFT

(11) **EP 1 031 241 B1**
(45) Veröffentlichungstag und Bekanntmachung des Hinweises auf die Patenterteilung: **11.09.2002**
(21) Anmeldenummer: 98962326.9
(22) Anmeldetag: 09.11.1998
(51) Int. Cl.: H04Q 3/00

(54) **ZEICHENGABEPUNKT EINES ZEICHENGABENETZES**
SIGNALLING POINT OF A SIGNALLING NETWORK
POINT DE SIGNALISATION D'UN RESEAU DE SIGNALISATION

(30) Priorität: 10.11.1997 EP 97119662
(43) Veröffentlichungstag der Anmeldung: 30.08.2000
(73) Patentinhaber: SIEMENS AKTIENGESELLSCHAFT, 80333 München (DE)
(72) Erfinder: GRADISCHNIG, Klaus, D-82131 Gauting (DE)
(86) Internationale Anmeldenummer: EP9807146
(87) Internationale Veröffentlichungsnummer: WO99025128

(56) Entgegenhaltungen:
- EP-A- 0 681 405
- WO-A-97/11563
- US-A- 5 029 165

## Beschreibung

In einem Zeichengabenetzwerk für das ITU Zeichengabeverfahren Nr. 7 oder seiner regionalen und nationalen Varianten (wie z.B. ETSI ETS 300 008, ANSI Tl.111, Deutsche Telekom 163TR72) werden die Zeichengabestrecken (signalling links), welche zwei Zeichengabepunkte (signalling points) verbinden, normalerweise zu Zeichengabestreckenbündel (signalling linksets) zusammengefaßt. Ist eine Zeichengabenachricht (MSU) nun über ein Zeichengabestreckenbündel zu übertragen, wird an Hand des im Zeichengabestreckenauswahlfeldes (signiling link selection) der Zeichengabenachricht enthaltenen Wertes vom MTP eine betimmte Zeichengabestrecke zur Übertragung ausgewählt.

Dabei wird vom Nachrichtentransferteil (Message Transfer Part MTP, siehe z.B. Q.701 bis Q.706), welcher für das Übertragen der Zeichengabenachrichten veranwortlich ist, sichergestellt, daß Zeichengabenachrichten mit identischem Zeichengabestreckenauswahlfeld normalerweise denselben Weg durch das Zeichengabenetz nehmen, sich also nicht überholen können. Dies geschieht dadurch, daß Zeichengabenachrichten mit einem bestimmten Wert im Zeichengabestreckenauswahlfeld zu einem bestimmten Ziel von dem MTP in einem gegebenen Zeichengabestreckenbündel immer über dieselbe Zeichengabestrecke gesendet werden, es also normalerweise eine Zeichengabestreckenbündel-bezogene (oder wenigsten zielbezogene) feste Zuordnung zwischen Zeichengabestreckenauswahlfeld und einer Zeichengabestrecke eines Zeichengabestreckenbündels gibt.

Aus dem Dokument US-A-5 029 165 ist ebenfalls ein Nachrichtentransferteil gemäß Zentralem Zeichengabesystem Nummer 7 bekannt, der das Zeichengabestreckenauswahlfeld einer weiterzuleitenden Nachricht benutzt, um die Nachricht innerhalb eines Zeichengabestreckenbündels einer bestimmten Zeichengabestrecke fest zuzuordnen.

Von dieser festen Zuordnung wird abgewichen, wenn es zum Ausfall einer Zeichengabestrecke (oder eines Zeichengabestreckenbündels) kommt. In diesem Fall werden die Zeichengabenachrichten über Ersatz-Zeichengabestrecken oder Ersatz-Zeichengabestreckenbündel gesendet. Wenn eine oder mehrere ausgefallene Zeichengabestrecken wieder verfügbar werden, kann die ansonsten feste Zuordnung zwischen den Werten des Zeichengabestreckenauswahlfeldes und der für solche Zeichengabenachrichten zu verwendenden Zeichengabestrecke abgeändert werden (siehe Q.704, §4.2.2). D.h. die feste Zuordnung von Zeichengabeauswahlfeld zu einer bestimmten Zeichengabestrecke des Zeichengabebündels kann jetzt eine andere sein als vor dem Ausfall.

Weitere Informationen zur Auswahl eines bestimmten Zeichengabestreckenbündels und einer bestimmten Zeichengabestrecke an Hand des Zeichengabestreckenauswahlfeldes sind z.B. in Q.704 und Q.705 zu finden. Im speziellen folgt daraus, daß diese Zuordnung zwar gewissen Prinzipien unterliegt (eines ist z.B., daß eine möglichst gleiche Belastung der Zeichengabestrecke anzustreben ist), sonst aber in den einzelnen Zeichengabepunkten unabhängig von den Auswahlkriterien anderer Zeichengabepunkte ist.

Es kann also z.Zt. in einem Zeichengabenetz nicht davon ausgegangen werden, daß eine Nachricht mit einem bestimmten Wert im Zeichengabestreckenauswahlfeld in jedem auf ihrem Zeichengabeweg benutzten Zeichengabestreckenbündel einen bestimmte, vorher festgelegte Zeichengabestrecke nimmt (zwar kann ein Sender davon ausgehen, daß seine Nachrichten mit gleichem SLS den gleichen Weg nehmen, doch kann er normalerweise nicht wissen, daß z.B. eine Nachricht mit SLS=1 in jedem Linkset über den Link=1 gesendet wird, da die Zuordnung der SLS Werte zu den Links in jedem Knoten autonom erfolgen kann. Ferner kann man Beispiele angeben, bei denen es nach einem Ausfall von Links nicht möglich ist, die ursprüngliche Zuordnung von SLS Wert zu Link ohne "zusätzliche" eigentlich überflüssige Umverteilung der SLS-Werte zu erreichen. Daher auch die Bemerkung in Q.704, §4.2.2, daß dann eine "geänderte" feste Zuordnung möglich ist).

Damit ist es für einen Anwender und den MTP (des Zentralen Zeichengabeverfahrens Nr. 7 ) nicht möglich, spezielle Eigenschaften einzelner Zeichengabestrecken, welche über die allgemein vorhandenen Eigenschaften der Zeichengabestrecken in einem Zeichengabenetz hinausgehen, nutzbringend anzuwenden. Als Beispiel für eine solche Eigenschaft mag die Übertragungskapazität einer Zeichengabestrecke dienen. Gäbe es in einem Zeichengabestreckenbündel eine ausgezeichnete Zeichengabestrecke, welche eine wesentlich höhere Übertragungskapazität als die übrigen Zeichengabestrecken besäße, so könnte diese wegen des generellen Konzeptes der (möglichst) Gleichverteilung des Zeichengabeverkehrs über alle Zeichengabestrecken des Zeichengabestreckenbündels nicht ausgenutzt werden. Würde das Zeichengabestreckenbündel nämlich so mit Verkehr belastet werden, daß die Zeichengabestrecke mit der hohen Übertragungskapazität auch dementsprechend viel Verkehr trüge, würden die anderen Zeichengabestrecken des Zeichengabestreckenbündels wegen der vom MTP benutzten Methode zur Erzielung einer Gleichverteilung überlastet werden. Damit macht ein Betreiben eines Zeichengabestreckenbündels mit Zeichengabestrecken unterschiedlicher Eigenschaften wenig Sinn.

Aufgabe der Erfindung ist es nun, einen Zeichengabepunkt bzw. ein Verfahren anzugeben, mit dem eine Ausnutzung der speziellen Eigenschaften einzelner Zeichengabestrecken in einem Zeichengabenetz möglich wird, ohne daß gesamte Zeichengabestreckenbündel diese speziellen Eigenschaften besitzen müssen.

Diese Aufgabe wird durch einen Zeichengabepunkt gemäß Anspruch 1 bzw. ein Verfahren nach Anspruch 6 gelöst.

Im folgenden wird die Erfindung anhand des konkreten Beispieles der Ausnutzung von Zeichengabestrecken basierend auf Q.2210, Q.2240 und Q.2110 in einem ansonsten auf Q.701 bis Q.706 basierenden Netzwerk für die speziellen Belange des Zeichengabeverbindungssteuerungsteiles (SCCP, siehe z.B. Q.711 bis Q.715) näher beschrieben. Dabei wird davon ausgegangen, daß es aufgrund von Kosten- oder sonstigen Gründen Zeichengabestreckenbündel im Netzwerk gibt, welche sowohl S-AAL Zeichengabestrecken gemäß Q.2110 und Q.2140 als auch solche gemäß MTP Level 2 (Q.703) besitzen.

Der Zeichengabeverbindungssteuerungsteil wird insbesondere deshalb als Beispiel ausgewählt, weil er aufgrund seines Einsatzes der prädestinerte Nutznießer solch erweiterter Eigenschaften von Zeichengabestrecken (längere maximale Nachrichtenlänge, größere Übertragungskapazität) ist.

Um diesen Einsatz von leistungsfähigen Zeichengabestrecken zu ermöglichen und ihre Eigenschaften auszunützen, sind zwei Punkte zu beachten:
1. Im Falle, daß die erweiterte Kapazität in einem Zeichengabestreckenbündel auch verfügbar ist, sollte der für sie vorgesehene Verkehr auch über die entsprechende Zeichengabestrecke geleitet werden.
2. Sollte es zu einem Ausfall der die erweiterte Kapazität zur Verfügung stellenden Zeichengabestrecke(n) kommen, muß ggf. sichergestellt sein, daß der Verkehr - wenn u.U. auch mit gewissen Einschränkungen quantitativer Natur - prinzipiell weiter abgewickelt werden kann oder aber einer definierten Fehlerbehandlung zugeführt werden kann.

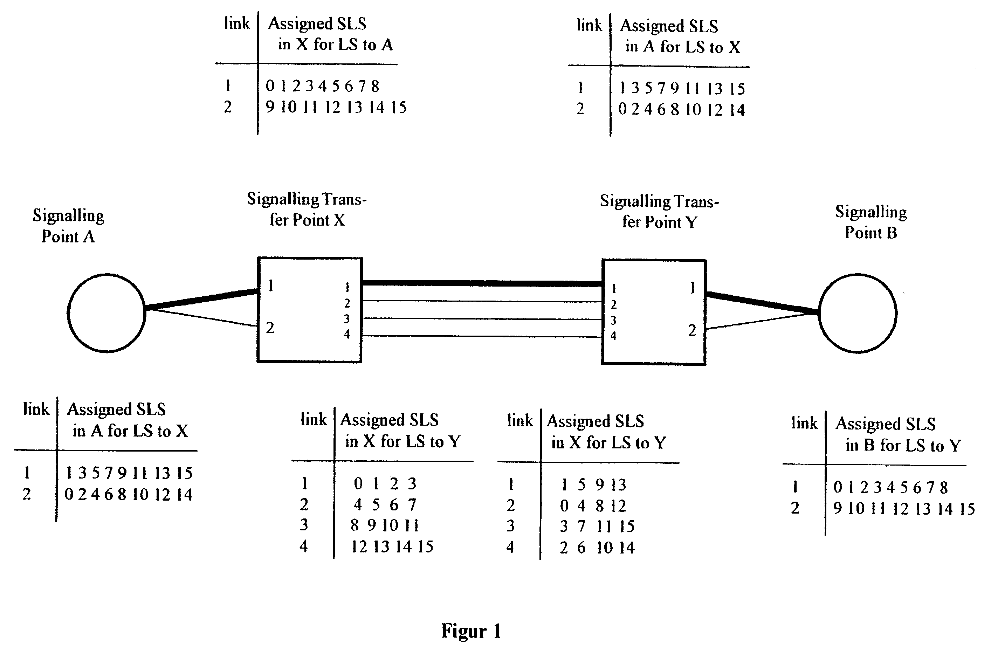

Der Lösungsweg für die genannten Punkte wird im folgenden anhand Figur 1 erläutert.

Figur 1 zeigt einen Netzwerkausschnitt (weitere Knoten und Zeichenabestecken wurden nicht dargestellt), in dem zwei Zeichengabepunkte (A und B) über zwei Zeichengabetransferpunkte (X und Y) miteinander verbunden sind. Ebenso dargestellt sind mögliche Zuordnungstabellen, welche den einzelnen Zeichengabestrecken (link) der Zeichengabestreckenbündel (LS) die über sie zu sendenden Werte des Zeichengabeauswahlfeldes (SLS) zuweisen. Man sieht, daß die ,SLS-Werte innerhalb eines LS gleichmäßig auf die Links verteilt sind, daß aber z.B. auf der Strecke von A nach B eine Nachricht mit SLS=2 im LS von A nach X Link 2, im LS von X nach Y link 1, und von Y nach B wiederum Link 1 benützt. Ferner soll in jedem der dargestellten LS der Link mit Nummer 1 ein durch besondere Kapazität ausgezeichneter sein.

### Lösung für 1.

Dazu werden erstens den Zeichengabestrecken, welche diese erweiterte Kapazität zur Verfügung stellen, in jedem Zeichengabestreckenbündel, in dem sie zur Anwendung kommen, im gesamten Zeichengabenetz die gleichen Werte des Zeichengabestreckenauswahlfeldes zugeordnet, z.B. der Wert 1, wenn es in solchen Zeichengabestreckenbündeln eine solche Zeichengabestrecke vorhanden ist (die genannte Zuordnung erfolgt bei Inbetriebnahme der Zeichengabestrecke mit der erweiterten Kapazität, entweder über ein zentrales Administrationzentrum oder aber durch individuelle Administration in den betroffenen Knoten).

Zum zweiten wird der Nachrichtentransferteil dahingehend eingeschränkt, daß er für solche Zeichengabestreckenbündel die Zuordnung zwischen Zeichengabestrecke und Wert des Zeichengabestreckenauswahlfeldes im Normalbetrieb (d.h. kein Ausfall dieser speziellen Zeichengabestrecke ) konstant hält bzw. nach Ausfall und Wiederinbetriebnahme dieser speziellen Zeichengabestrecke ihr zumindest wieder die ausgezeichnenten Werte des Zeichengabestreckenauswahlfeld zuordnet.

Drittens wird der diese Erweiterung nutzende Anwender (z.B. SCCP, Q.711 bis Q.715) des Nachrichtentransferteiles dahingehend erweitert, daß er den Wert des Zeichengabestreckenauswahlfeldes für Zeichengabenachrichtenströme, welche von der erweiterten Kapazität profitieren können, dementsprechend auswählt (der Anwender kennt also die genannte Zuordnung aufgrund administrativer Konfigurationsdaten, welche wiederum über ein zentrales Administrationzentrum oder aber durch individuelle Administration in den betroffenen Knoten eingebracht werden.

### Lösung für 2.

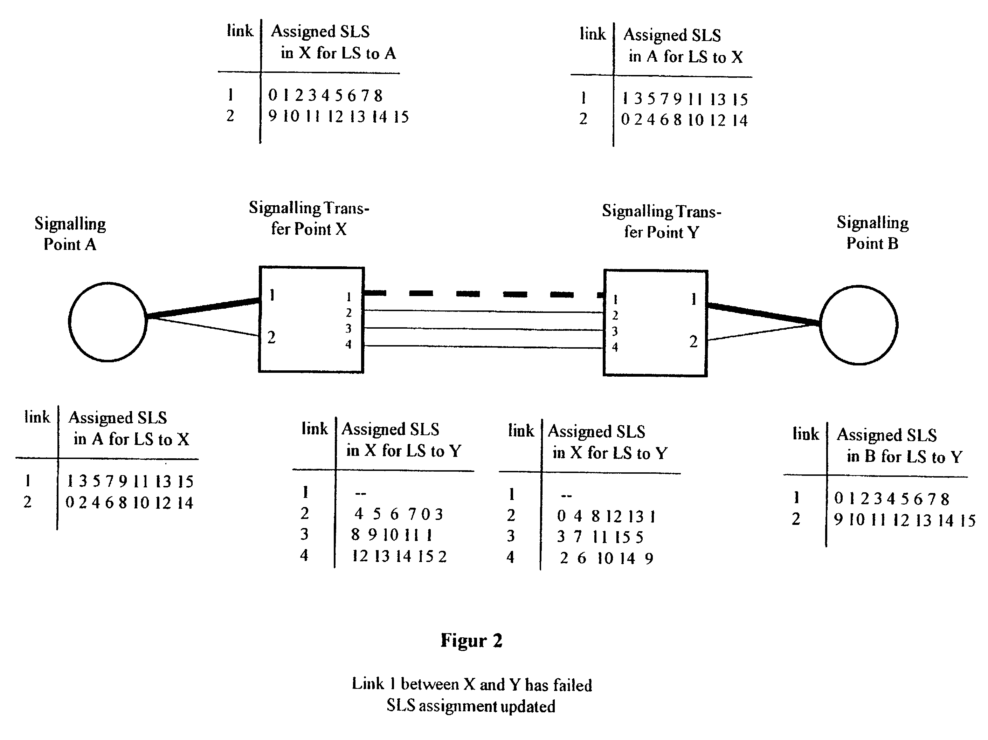

Figur 2 zeigt beispielhaft eine Situation, in der der Link mit der erhöhten Kapazität (beispielhaft gemäß Q.2110 und Q.2140) zwischen X und Y ausgefallen ist. Eine Nachricht, die diese erhöhte Kapazität benötigt, z.B. aufgrund ihrer Länge, kann nun nicht mehr ohne weiteres zwischen X und Y übertragen werden.

Sollte für dieses Problem keine Lösung benötigt werden, weil man etwa darauf verzichten will, das Netz in diesem Falle mit dem speziellen Verkehr zu belasten, können betroffene Zeichengabenachrichten einfach verworfen werden. Anderenfalls kann eine mögliche Lösung des Interworkingproblems für den Zeichengabeverbindungssteuerungsteil zwischen Breitband- und Schmalbandzeichengabenetzwerk(teilen) erweitert werden. Diese bekannte Lösung funktioniert derart, daß, wenn der Nachrichtentransferteil in einem Knoten, der das Interworking zwischen Breitband- und Schmalbandnetzen abwickelt, eine Nachricht des SCCP erkennt, welche nicht über das Schmalbandnetz übertragen werden kann, stellt er sie dem lokalen SCCP zu, obwohl diese Nachricht für einen anderen Zeichengabepunkt bestimmt ist.

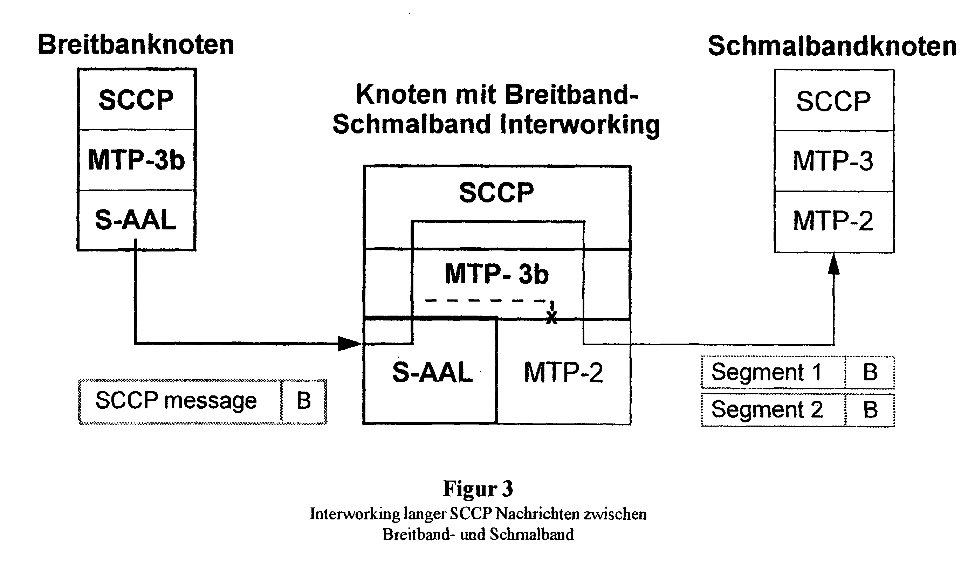

Der lokale SCCP hat dann die Möglichkeit, diese Nachricht entsprechend zu segmentiern, sodaß sie auch über das Schmalbandnetz übertragen werden kann (Figur 3).

Diese Methode wird nun dahingehend erweitert, daß, wenn der Nachrichtentransferteil eine Nachricht erkennt, welche die erweiterte Kapazität benötigt, ohne daß eine entsprechende Zeichengabestrecke verfügbar ist, er sie dem lokal betroffenen Anwender des Nachrichtentransferteiles zustellt, obwohl diese Nachricht für einen anderen Zeichengabepunkt bestimmt ist.

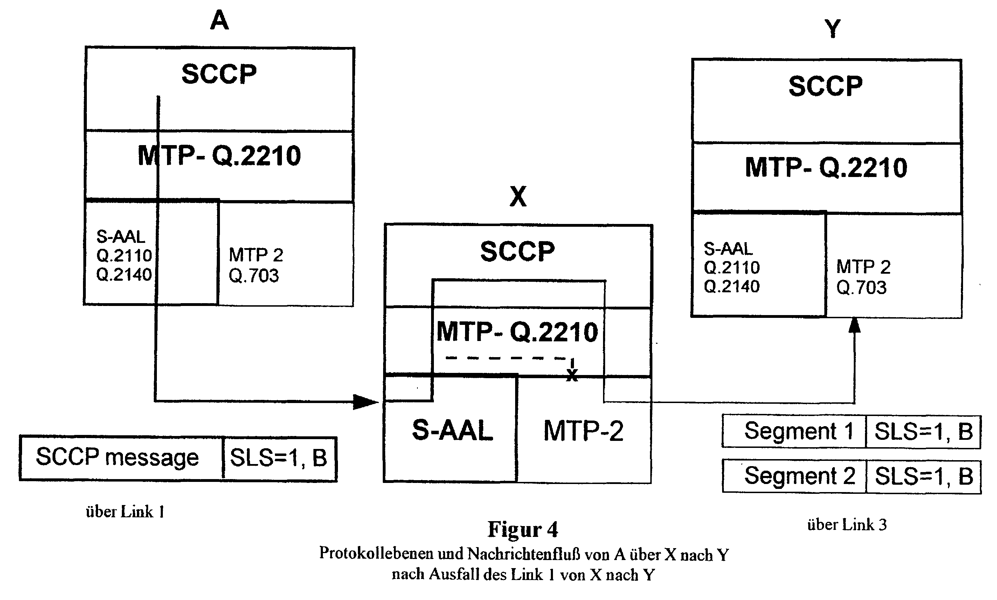

Der lokale Anwender hat dann die Möglichkeit, diese Nachricht entsprechend umzuformen, sodaß sie auch mit den bestehenden Möglichkeiten übertragen werden kann (siehe Figur 4). Die genannte Umformung durch den Zeichengabeverbindungssteuerungsteil kann z.B. darin bestehen, daß er eine zu lange Nachricht segmentiert.

Alternativ könnte der lokale Anwender auch eine Fehlerbehandlung einleiten. Der SCCP könnte z.B. bei Bedarf die Return on Error Procedure durchführen (also eine (L)UDT Servicenachricht (L)UDTS) an den Ursprung der Nachricht zurücksenden) (siehe z.B. Q.711 bis Q.715).

## Patentansprüche

1. Zeichengabepunkt eines Zeichengabenetzes, mit
einem Nachrichtentransferteil (MTP) gemäß Zentralem Zeichengabesystem Nummer 7, wobei der Nachrichtentransferteil des Zeichengabepunkts das Zeichengabestreckenauswahlfeld (SLS) einer weiterzuleitenden Nachricht benutzt, um die Nachricht innerhalb eines Zeichengabestreckenbündels einer bestimmten Zeichengabestrecke zuzuordnen,
**dadurch gekennzeichnet, daß**
bei mindestens einem Wert des Zeichengabestreckenauswahlfeldes dem Nachrichtentransferteil nach dem Kriterium des Typs von Zeichengabestrecke vorgegeben ist, welcher Zeichengabestrecke des Zeichengabestreckenbündels der Nachrichtentransferteil eine Nachricht mit diesem Wert des Zeichengabestreckenauswahlfeldes zuzuordnen hat.

2. Zeichengabepunkt nach Anspruch 1,
**dadurch gekennzeichnet, daß**
er die genannte Vorgabe bei Inbetriebnahme bzw. nach Ausfall und Wiederinbetriebnahme der Zeichengabestrecken vornimmt.

3. Zeichengabepunkt nach einem der Ansprüche 1 oder 2,
**gekennzeichnet durch**
einen Anwender (SCCP) des Nachrichtentransferteiles, der bei bestimmten Nachrichten veranlaßt, daß diese Nachrichten netzweit über einen gewünschten Typ von Zeichengabestrecke geroutet werden, indem er das Zeichengabestreckenauswahlfeld (SLS) von solchen Nachrichten mit dem für diesen Typ vorgegebenen Wert versorgt.

4. Zeichengabepunkt nach einem der Ansprüche 1 bis 3,
**dadurch gekennzeichnet, daß**
der Nachrichtentransferteil (MTP) eine Zeichengabenachricht, die er aufgrund des Wertes ihres Zeichengabestreckenauswahlfeldes (SLS) auf eine Zeichengabestrecke eines bestimmten Typs weiterleiten müßte, der lokalen Instanz des Anwenders zur weiteren Bearbeitung übergibt, wenn der Wert ihres Zeichengabestreckenauswahlfeldes (zur Zeit) keine entsprechende Zeichengabestrecke identifiziert.

5. Zeichengabepunkt nach Anspruch 4,
**dadurch gekennzeichnet, daß**
die lokale Instanz des Anwenders (SCCP) eine vom Nachrichtentransferteil (MTP) wegen Nichtweiterleitbarkeit erhaltene Nachricht umformt und dem Nachrichtentransferteil wieder zur Weiterleitung zurückgibt.

6. Zeichengabepunkt nach Anspruch 4,
**dadurch gekennzeichnet, daß**
die lokale Instanz des Anwenders (SCCP) eine Fehlerbehandlung einleitet, wenn sie vom Nachrichtentransferteil (MTP) eine nichtweiterleitbare Nachricht erhält.

7. Verfahren zur Behandlung von Zeichengabenachrichten, das in einem Zeichengabepunkt mit einem Nachrichtentransferteil (MTP) gemäß Zentralem Zeichengabesystem Nummer 7 abläuft, demgemäß von dem Nachrichtentransferteil des Zeichengabepunkts das Zeichengabestreckenauswahlfeld (SLS) einer weiterzuleitenden Nachricht benutzt wird, um die Nachricht innerhalb eines Zeichengabestreckenbündels einer bestimmten Zeichengabestrecke zuzuordnen,
**dadurch gekennzeichnet, daß**
dem Nachrichtentransferteil bei mindestens einem Wert des Zeichengabestreckenauswahlfeldes nach dem Kriterium des Typs von Zeichengabestrecke vorgegeben wird, welcher Zeichengabestrecke des Zeichengabestreckenbündels der Nachrichtentransferteil eine Nachricht mit diesem Wert des Zeichengabestreckenauswahlfeldes zuzuordnen hat.

8. Verfahren nach Anspruch 7,
**dadurch gekennzeichnet, daß**
die genannte Vorgabe bei Inbetriebnahme bzw. nach Ausfall und Wiederinbetriebnahme der Zeichengabestrecke durchgeführt wird.

9. Verfahren nach einem der Ansprüche 7 oder 8,
**dadurch gekennzeichnet, daß**
eine Zeichengabenachricht, die von dem Nachrichtentransferteil (MTP) aufgrund des Wertes ihres Zeichengabestreckenauswahlfeldes auf eine Zeichengabestrecke mit den genannten speziellen Eigenschaften weitergeleitet werden müßte, der lokalen Instanz des Anwenders zur weiteren Bearbeitung übergeben wird, wenn anhand des Wert ihres Zeichengabestreckenauswahlfeldes (zur Zeit) keine entsprechende Zeichengabestrecke identifiziert werden kann.

10. Verfahren nach Anspruch 9,
**dadurch gekennzeichnet, daß**
von der lokalen Instanz des Anwenders eine vom Nachrichtentransferteil wegen Nichtweiterleitbarkeit erhaltene Nachricht umgeformt und dem Nachrichtentransferteil wieder zur Weiterleitung zurückgegeben wird.

11. Verfahren nach Anspruch 9,
**dadurch gekennzeichnet, daß**
von der lokalen Instanz des Anwenders eine Fehlerbehandlung eingeleitet wird, wenn sie vom Nachrichtentransferteil eine nichtweiterleitbare Nachricht erhält.

## Claims

1. Signalling point in a signalling system, having
a message transfer part (MTP) in accordance with Central Signalling System No. 7, where the signalling point's message transfer part uses the signalling link selection field (SLS) of a message which is to be forwarded in order to assign the message to a particular signalling link within a signalling link set,
**characterized in that**
at least one value of the signalling link selection field stipulates for the message transfer part, on the basis of the criterion of the type of signalling link, that signalling link in the signalling link set to which the message transfer part needs to assign a message having this value in the signalling link selection field.

2. Signalling point according to Claim 1,
**characterized in that**
it makes said stipulation when the signalling links are started up or after the signalling links have been down and have been started up again.

3. Signalling point according to one of Claims 1 or 2,
**characterized by**
a user (SCCP) of the message transfer part, who, for particular messages, prompts these messages to be routed throughout the network using a desired type of signalling link by providing the signalling link selection field (SLS) of such messages with the value stipulated for this type.

4. Signalling point according to one of Claims 1 to 3,
**characterized in that**
a signalling message which the message transfer part (MTP) would need to forward to a signalling link of a particular type on account of the value of the signalling link selection field (SLS) of said signalling message is transferred by the message transfer part (MTP) to the user's local entity for further processing if the value of its signalling link selection field does not (currently) identify an appropriate signalling link.

5. Signalling point according to Claim 4,
**characterized in that** the local entity for the user (SCCP) transforms a message received from the message transfer part (MTP) because it cannot be forwarded and returns it to the message transfer part again for forwarding.

6. Signalling point according to Claim 4,
**characterized in that**
the local entity of the user (SCCP) initiates error handling if it receives from the message transfer part (MTP) a message which cannot be forwarded.

7. Method for handling signalling messages which proceeds in a signalling point having a message transfer part (MTP) in accordance with Central Signalling System No. 7, according to which the signalling point's message transfer part uses the signalling link selection field (SLS) of a message which is to be forwarded in order to assign the message to a particular signalling link within a signalling link set,
**characterized in that**
at least one value of the signalling link selection field stipulates for the message transfer part, on the basis of the criterion of the type of signalling link, that signalling link in the signalling link set to which the message transfer part needs to assign a message having this value in the signalling link selection field.

8. Method according to Claim 7,
**characterized in that**
said stipulation is made when the signalling link is started up or after the signalling link has been down and has been started up again.

9. Method according to one of Claims 7 or 8,
**characterized in that**
a signalling message which the message transfer part (MTP) would need to forward to a signalling link having said special properties on account of the value of the signalling link selection field of said signalling message is transferred to the user's local entity for further processing if the value of its signalling link selection field cannot (currently) be used to identify an appropriate signalling link.

10. Method according to Claim 9,
**characterized in that**
the user's local entity transforms a message received from the message transfer part because it cannot be forwarded and returns it to the message transfer part again for forwarding.

11. Method according to Claim 9,
**characterized in that**
the user's local entity initiates error handling if it receives from the message transfer part a message which cannot be forwarded.

## Revendications

1. Point de signalisation pour un réseau de signalisation, avec
un sous-système transporteur de messages (MTP) suivant le Système de Signalisation Centralisé Numéro 7, le sous-système transport de messages du point de signalisation utilisant le champ de sélection du canal sémaphore (SLS) d'un message à transmettre afin d'affecter le message à un certain canal sémaphore dans un faisceau de canaux sémaphores,
**caractérisé en ce que**
dans le cas d'au moins une valeur du champ de sélection du canal sémaphore, il est indiqué au sous-système transporteur de messages, suivant le critère du type de canal sémaphore, auquel canal sémaphore du faisceau de canaux sémaphores le sous-système transport de messages doit affecter un message avec cette valeur du champ de sélection du canal sémaphore.

2. Point de signalisation selon la revendication 1,
**caractérisé en ce que**
il réalise la valeur indiquée mentionnée à la mise en fonction resp. après une défaillance et à la remise en fonction des canaux sémaphores.

3. Point de signalisation selon l'une des revendications 1 ou 2,
**caractérisé par**
un utilisateur (SCCP) du sous-système transporteur de messages, qui, en cas de certains messages, ordonne que ces messages soient acheminés dans le réseau par l'intermédiaire d'un type souhaité de canal sémaphore, du fait qu'il fournit le champ de sélection du canal sémaphore (SLS) de tels messages avec la valeur prédéfinie pour ce type.

4. Point de signalisation selon l'une des revendications 1 à 3,
**caractérisé en ce que**
le sous-système transporteur de messages (MTP) transmet un message de signalisation, qu'il devrait transférer à un canal sémaphore d'un certain type en raison de la valeur de son champ de sélection du canal sémaphore (SLS), à l'instance locale de l'utilisateur pour poursuivre son traitement lorsque la valeur de son champ de sélection du canal sémaphore n'identifie (pour le moment) aucun canal sémaphore correspondant.

5. Point de signalisation selon la revendication 4,
**caractérisé en ce que**
l'instance locale de l'utilisateur (SCCP) modifie un message reçu par le sous-système transporteur de messages (MTP) en raison de non transférabilité et le redonne à nouveau au sous-système transporteur de messages pour poursuivre son transfert.

6. Point de signalisation selon la revendication 4,
**caractérisé en ce que**
l'instance locale de l'utilisateur (SCCP) initie un traitement d'erreur lorsqu'elle reçoit du sous-système transporteur de messages (MTP) un message non transférable.

7. Procédé pour le traitement de messages de signalisation, qui se déroule dans un point de signalisation, avec un sous-système transporteur de messages (MTP) suivant le Système Centralisé de Signalisation Numéro 7, selon lequel le champ de sélection du canal sémaphore (SLS) d'un message à transférer est utilisé par le sous-système transporteur de messages du point de signalisation, afin d'affecter le message à un certain canal sémaphore dans un faisceau de canaux sémaphores,
**caractérisé en ce que**
dans le cas d'au moins une valeur du champ de sélection du canal sémaphore, il est indiqué au sous-système transporteur de messages, suivant le critère du type de canal sémaphore, auquel canal sémaphore du faisceau de canaux sémaphores le sous-système transporteur de messages doit affecter un message avec cette valeur du champ de sélection du canal sémaphore.

8. Procédé selon la revendication 7,
**caractérisé en ce que**
la valeur indiquée mentionnée est réalisée à la mise en fonction resp. après une défaillance et à la remise en fonction du canal sémaphore.

9. Procédé selon l'une des revendication 7 ou 8,
**caractérisé en ce que**
un message de signalisation, qui devrait être transféré par le sous-système transporteur de messages (MTP) à un canal sémaphore avec les caractéristiques spéciales citées en raison de la valeur de son champ de sélection de canal sémaphore, est transmis à l'instance locale de l'utilisateur pour continuer d'être traité lorsqu'aucun canal sémaphore correspondant ne peut être identifié (pour le moment) à l'aide de la valeur de son champ de sélection du canal sémaphore.

10. Procédé selon la revendication 9,
**caractérisé en ce que**
un message reçu par l'instance locale de l'utilisateur est modifié par le sous-système transporteur de messages en raison de non transférabilité et est redonné à nouveau au sous-système transporteur de message pour poursuivre son transfert.

11. Procédé selon la revendication 9,
**caractérisé en ce que**
un traitement d'erreur est initié par l'instance locale de l'utilisateur lorsqu'elle reçoit du sous-système transport de messages un message non transférable.
